# EUROPEAN PATENT SPECIFICATION

(11) **EP 4 160 261 B1**
(45) Date of publication and mention of the grant of the patent: **31.12.2025**
(21) Application number: 21833430.8
(22) Date of filing: 23.03.2021
(51) Int. Cl.: G01S 7/481, G02B 3/00, G02B 19/00, G02B 27/09

(54) **LIGHT RECEIVING DEVICE AND LIDAR SYSTEM**
LICHTEMPFANGSVORRICHTUNG UND LIDAR-SYSTEM
DISPOSITIF DE RÉCEPTION DE LUMIÈRE ET SYSTÈME LIDAR

(30) Priority: 30.06.2020 CN 202010619749
(43) Date of publication of application: 05.04.2023
(73) Proprietor: Shenzhen Yinwang Intelligent Technologies Co., Ltd., Shenzhen, Guangdong 518129 (CN)
(72) Inventor: AN, Kai, Shenzhen, Guangdong 518129 (CN); ZHOU, Yilun, Shenzhen, Guangdong 518129 (CN); DING, Yun, Shenzhen, Guangdong 518129 (CN)
(74) Representative: Maiwald GmbH
(86) International application number: PCT/CN2021/082359
(87) International publication number: WO 2022/001219

(56) References cited:
- WO-A1-2016/088157
- CN-A- 105 051 522
- CN-A- 108 459 328
- CN-U- 206 470 403
- US-A- 5 357 101
- US-A1- 2006 185 713
- US-A1- 2009 223 555
- US-A1- 2014 160 784

## Description

This disclosure claims priority to Chinese Patent Application No. 202010619749.X, filed with the China National Intellectual Property Administration on June 30, 2020 and entitled "OPTICAL RECEIVING APPARATUS AND LIGHT DETECTION AND RANGING SYSTEM".

### TECHNICAL FIELD

The disclosure relates to the light detection field, and in particular, to an optical receiving apparatus and a light detection and ranging system.

### BACKGROUND

A photodetector may be applied to many fields, for example, may be applied to a receiving apparatus in a light detection and ranging system. An operating principle of the light detection and ranging (LiDAR) system is that a laser beam at a specific frequency is emitted into a specified region, an object is encountered in a laser flying process, the laser beam is reflected on a surface of the object, and some lasers are reflected into a radar receiving apparatus to form an echo. The light detection and ranging receiving apparatus compares a received echo signal and a transmit signal, to obtain related information of the object, for example, a distance, an angle, or reflectivity.

There are a plurality of photodetectors such as an avalanche photodiode (APD), a single photon avalanche diode (SPAD), or a silicon photomultiplier (SiPM). The silicon photomultiplier SiPM includes an avalanche diode array operating in a Geiger mode, and includes a photon counter of a plurality of pixels. One pixel includes a plurality of independent photosensitive units, referred to as a cell, and response signals of the plurality of photosensitive units are accumulated and output through a common output channel. The SiPM has characteristics such as high sensitivity, a low bias voltage, and a compact structure.

When the SiPM is used as an optical receiving detector, because a received optical signal is converged by a receiving lens, the converged optical signal is incident on a small part of a pixel of a photosensitive surface of the SiPM, causing a small dynamic range of the detector and low detection efficiency.

Document US 2009/223555 A1 relates to a Concentrating Photovoltaics (CPV) module which includes a metal frame, a plurality of Fresnel lenses, a secondary reflective or refractive concentrator, multi-junction solar cells with up to 40 percent efficiency and a novel heat spreading material. The Fresnel lenses and the secondary concentrator focus the sun over 500 times to maximize the amount of photons collected by the solar cells and converted to electricity. A soft board material provides coefficient of thermal expansion (CTE) matched carrier for the solar cells and an efficient electrical connectivity method. The carrier board is attached to a specially formulated heat spreader made of graphite. At 40 percent the weight of aluminum and 18 percent the weight of copper, this specially formulated material offers thermal heat conductivity that is superior to copper.

Document US 2014/160784 A1 relates to light concentrating optic for use with a photovoltaic device which includes a light pipe having a first end portion for receiving light and a second end portion for outputting concentrated light. An optical element is coupled to the light pipe on the first end portion and configured to form an optical interface between the light pipe and the optical element. The optical element includes at least one light transmitting surface configured to redirect incident light entering the optical element to disperse the light to fall incident on side walls of the light pipe to increase homogeneity and intensity of light through the second end portion.

Document US 2006/185713 A1 relates to Solar panel system and apparatus wherein the panels are configured with liquid superconcentrators having outwardly disposed liquid imaging lenses of wide field of view performing with a sparse array of discrete multifunction photovoltaic cells which are electrically interconnected to provide a panel output. The liquid superconsentrator and associated sparse array of photovoltaic cells are configured in a row and column matrix and are mounted upon a polymeric back support.

Document WO 2016/088157 A1 provides a light receiving device for optical communication, said light receiving device being capable of reducing adverse effects due to noise. This light receiving device for optical communication is configured by being provided with at least: a space dividing section whereby a discretionary light beam can be taken out from inputted light by having the discretionary light pass through the space dividing section: a light receiving section that receives the light beam that has passed through the space dividing section; and a light shielding section that shields a space between the space dividing section and the light receiving section from light.

### SUMMARY

Embodiments of the disclosure provide an optical receiving apparatus and a light detection and ranging system as well as a detection method applied to the light detection and ranging system, to increase a dynamic range of a detector and the light detection and ranging system, and improve detection efficiency.

The invention is defined by the features of the independent claims. Preferred embodiments are defined in the dependent claims. In the following, parts of the description and drawing referring to examples, which are not covered by the claims are not presented as embodiments of the invention, but as illustrative examples useful for understanding the invention.

According to a first embodiment of the disclosure provides an optical receiving apparatus, including a photodetector and a plurality of beam homogenization units. The photodetector includes a plurality of pixels, each pixel includes a plurality of cells, and the cell is configured to convert a received optical signal into an electrical signal. Each beam homogenization unit corresponds to at least one pixel of the photodetector, and is configured to diffuse a received incident light beam to a plurality of cells included in the corresponding at least one pixel. The beam homogenization unit diffuses incident light to a plurality of cells, to increase a dynamic range of the entire detector, and improve detection efficiency.

The beam homogenization unit includes a beam homogenization prism, and a side wall of the beam homogenization prism is coated with a reflective coating, so that the received light beam is diffused to the plurality of cells included in the at least one pixel of the photodetector. The beam homogenization prism is used to evenly diffuse the incident light to a light-emitting surface.

In a possible design, a length L of the beam homogenization prism meets a condition: L ≥ d/(2 * tan(θ/2)), where d is a length of a short side of a light-passing cross section of the beam homogenization prism, and θ is a divergence angle existing when a light beam enters the prism. Such a dimensional characteristic enhances a diffusion effect.

In a possible design, the beam homogenization unit further includes a diffusion sheet, disposed before a light-entrance surface of the beam homogenization prism, and the diffusion sheet is configured to diffuse and output the received incident light beam to the light-entrance surface of the beam homogenization prism. In this case, a beam homogenization effect is further improved.

In a possible design, the beam homogenization unit further includes a microlens, disposed on a light-entrance surface of the beam homogenization unit; and the microlens is configured to converge the received incident light beam on the diffusion sheet or the light-entrance surface of the beam homogenization prism. The microlens is used to enlarge an angle of incidence of the incident light.

In a possible design, components of the beam homogenization unit are connected through bonding by using a photosensitive adhesive. The photosensitive adhesive is used to reduce an energy loss of the incident light.

In a possible design, the photodetector is a silicon photomultiplier SiPM. The silicon photomultiplier SiPM is used to allow the detector to have higher sensitivity.

In a possible design, a plurality of beam homogenization units are embraced and fastened by using a mechanical part, to improve durability of the optical receiving apparatus.

In a possible design, the beam homogenization unit corresponds to a plurality of pixels, and the plurality of beam homogenization units are a prism without internal isolation, and form a row layout, a column layout, or an irregular-shape layout, so that an application scenario of the optical receiving apparatus is more extensive.

In a possible design, a light-emitting end face of the beam homogenization unit has a same size as a photosensitive surface in the pixel of the detector, to reduce an energy loss of the incident light.

A second embodiment, of the disclosure provides a light detection and ranging system, including a light source, a scanner, a receiving lens, the optical receiving apparatus, and a processor. The light source is configured to output a laser beam. The scanner is configured to perform scanning in a specified region. The receiving lens is configured to converge, on the optical receiving apparatus, an echo optical signal reflected by an object. The optical receiving apparatus is configured to convert the echo optical signal into an echo electrical signal. The processor is configured to: analyze the echo electrical signal, and control the light source, the scanner, and the optical receiving apparatus. The light detection and ranging system has a large dynamic range and high detection efficiency.

A third embodiment of the disclosure provides a detection method, applied to the light detection and ranging system, including: outputting a control signal to a light source, to drive the light source to output a laser beam; outputting a control signal to a scanner, to drive the scanner to perform scanning in a specified mode; and receiving an echo signal output by an optical receiving apparatus, processing the echo signal, and obtaining object information corresponding to an echo. In this way, a dynamic range of detection is increased, and detection efficiency is improved.

### BRIEF DESCRIPTION OF DRAWINGS

FIG. 1 is a schematic diagram of a structure of a light detection and ranging system according to an example of the disclosure;
FIG. 2 is a schematic diagram of a photosensitive surface of a SiPM detector according to an example of the disclosure;
FIG. 3 is a schematic diagram of a relationship between a beam homogenization unit and a SiPM detector according to an example of the disclosure;
FIG. 4 is a schematic diagram in which a beam homogenization unit fits a SiPM detector according to an example of the disclosure;
FIG. 5 is a schematic diagram of a structure of a beam homogenization unit according to an example of the disclosure;
FIG. 6 is a schematic diagram of light reflection of a beam homogenization prism according to an example of the disclosure;
FIG. 7 is a schematic diagram in which beam homogenization units are embraced and fastened by using a mechanical part according to an example of the disclosure;
FIG. 8 is a schematic diagram of a scanning and detection method according to an example of the disclosure;
FIG. 9 is a schematic diagram in which beam homogenization prisms are combined according to an example of the disclosure;
FIG. 10 is a schematic three-dimensional diagram of a cylindrical microlens according to an example of the disclosure;
FIG. 11 is a schematic diagram in which an edge gap exists between photosensitive surfaces of a detector according to an example of the disclosure;
FIG. 12 is a schematic diagram of a structure of a beam homogenization unit corresponding to FIG. 11 according to an example of the disclosure;
FIG. 13 is a schematic diagram of an optical path of an optical receiving apparatus that does not include a beam homogenization prism according to an example of the disclosure;
FIG. 14 is a schematic diagram of receiving an echo photon corresponding to FIG. 13 according to an example of the disclosure;
FIG. 15 is a schematic diagram of an optical path of an optical receiving apparatus that includes a beam homogenization prism according to an example of the disclosure; and
FIG. 16 is a schematic diagram of receiving an echo photon corresponding to FIG. 15 according to an example of the disclosure.

### DETAILED DESCRIPTION

To make the objectives, technical solutions, and advantages of the disclosure clearer, the following further describes implementations of the disclosure in detail with reference to accompanying drawings.

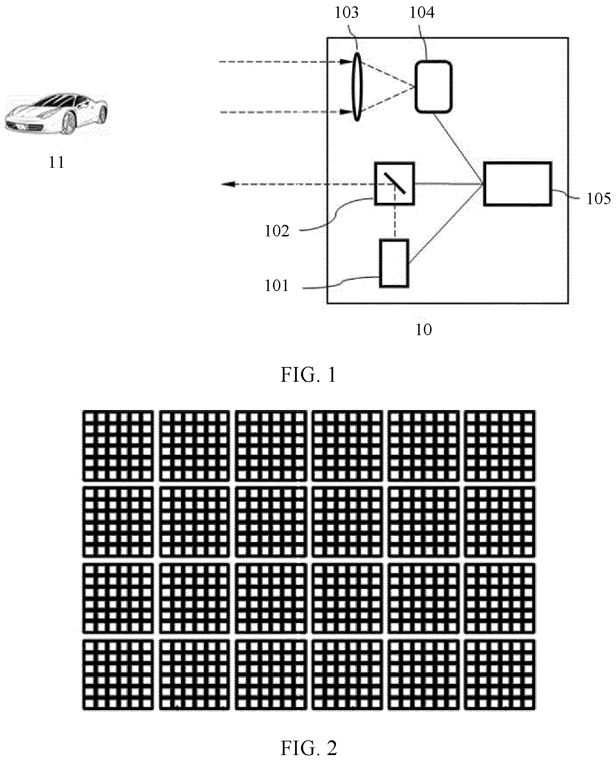

An example of the disclosure provides an optical receiving apparatus, and a light detection and ranging system to which the optical receiving apparatus is applied. As shown in FIG. 1, a light detection and ranging system 10 includes a light source 101, a scanner 102, a receiving lens 103, an optical receiving apparatus 104, and a processor 105.

The light source 101 is configured to output a laser beam.

The scanner 102 is configured to perform two-dimensional scanning in a specified region.

The receiving lens 103 is configured to converge, on the optical receiving apparatus 104, an echo optical signal reflected by an object 11.

The optical receiving apparatus 104 is configured to convert the echo optical signal into an echo electrical signal.

The processor 105 is configured to: control the light source 101, the scanner 102, and the optical receiving apparatus 104, and analyze the echo electrical signal to obtain a related parameter of the object 11. After two-dimensional scanning is completed, the processor 105 finally obtains a point cloud image through an analysis.

The optical receiving apparatus 104 includes a photodetector, the photodetector may be a silicon photomultiplier SiPM. The SiPM includes a plurality of pixels, and the pixels usually form a two-dimensional pixel array, for example, M * N pixels, where M and N are positive integers greater than 1. Each pixel includes a plurality of cells, and each cell is an independent photosensitive unit (cell), and is configured to convert a received optical signal into an electrical signal. Electrical signals of a plurality of cells included in one pixel are accumulated and output through a common output channel.

An example of the SiPM detector is shown in FIG. 2. The SiPM detector includes 6 * 4 pixels, and each pixel includes 6 * 6 pixels. To complete a point cloud image of 1440 * 900 pixels, for a SiPM detector of 6 * 4 pixels, the scanner needs to perform scanning by setting 240 angles in a horizontal direction and setting 225 angles in a vertical direction, to finally form a complete point cloud image.

The optical receiving apparatus 104 further includes a plurality of beam homogenization units, and each beam homogenization unit corresponds to one pixel of the photodetector. The beam homogenization unit is configured to diffuse the received echo optical signal to a plurality of pixels included in a corresponding pixel.

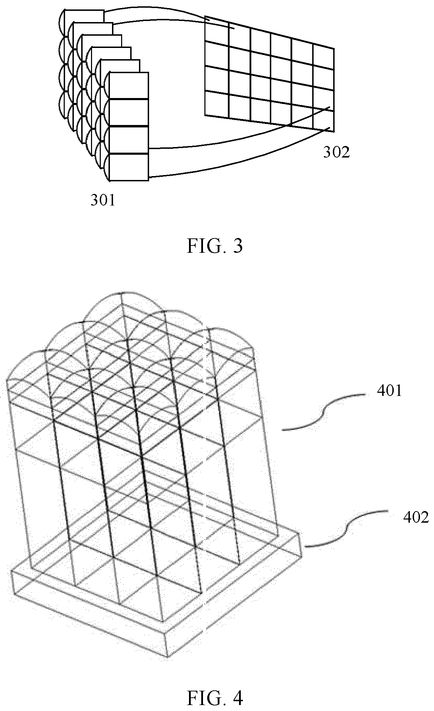

As shown in FIG. 3, the optical receiving apparatus includes 6 * 4 beam homogenization units (301), and the 24 beam homogenization units respectively correspond to 6 * 4 pixels (302) of the photodetector. In an actual product, a light-emitting surface of the beam homogenization unit usually fits a photosensitive surface of the SiPM detector.

FIG. 4 is a schematic diagram in which a beam homogenization unit fits a SiPM detector. For clarity, the photodetector in the figure includes 3 * 3 pixels, there are nine beam homogenization units 401, and the nine beam homogenization units 401 are in a one-to-one correspondence with the 9 pixels of the SiPM detector 402.

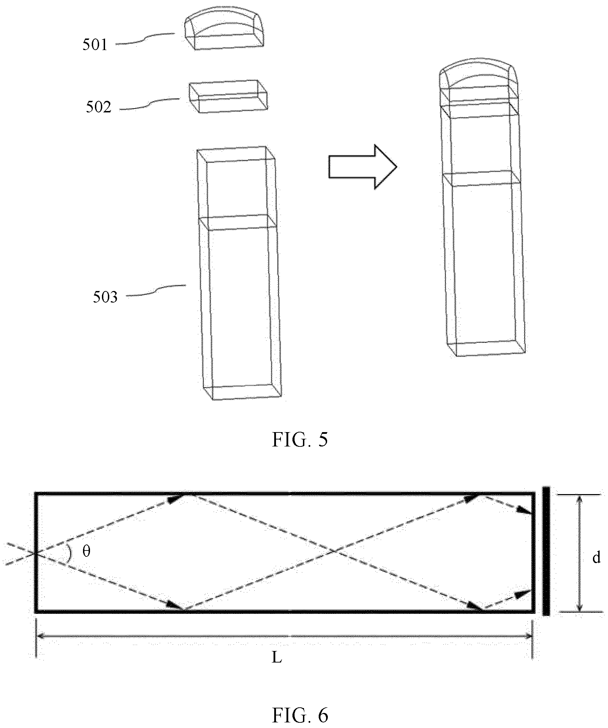

As shown in FIG. 5, a structure of the beam homogenization unit provided in this example of the disclosure includes a microlens 501, a diffusion sheet 502, and a beam homogenization prism 503. The microlens 501, the diffusion sheet 502, and the beam homogenization prism 503 may be fixedly connected through bonding by using a photosensitive adhesive, to form a beam homogenization unit, as shown on a right side in FIG. 5.

The microlens 501 is configured to: receive an echo incident light beam, and converge the incident light beam on the diffusion sheet. The microlens may be used to enlarge a receiving numerical aperture, so that a light beam at a larger angle of incidence can enter the optical receiving apparatus. For example, a radius of spherical surface curvature of the microlens may be designed to be 1.4 mm and a thickness is 1 mm. Therefore, the receiving numerical aperture is approximately 0.25. A material of the microlens may be BK7 glass, or the like.

The diffusion sheet 502 is configured to diffuse the received incident light beam. A divergence angle of a light beam entering the diffusion sheet through the microlens is enlarged by the diffusion sheet, to rapidly diffuse the light beam in the beam homogenization prism, and reduce a length of the beam homogenization prism.

A side wall of the beam homogenization prism 503 is usually coated with a reflective coating, so that the light beam passing through the diffusion sheet is further diffused to a plurality of cells of a corresponding pixel of the photodetector. The beam homogenization prism has a beam homogenization function: The light beam enters the beam homogenization prism. A "photon well" is formed because the side wall of the beam homogenization prism is coated with the reflective coating. When the light beam is reflected for a plurality of times in the well, and arrives at the photosensitive surface of the photodetector SiPM, energy is evenly distributed. Because of the reflective coating, a photon cannot pass through the prism to arrive at an adjacent beam homogenization unit, to avoid crosstalk.

A light-passing cross section of the beam homogenization prism may be rectangular, and is usually square. FIG. 6 is a schematic diagram of light reflection of a beam homogenization prism. In FIG. 6, the length of the beam homogenization prism is L, and a side length of a cross-sectional square is d. Herein, d is usually the same size as or slightly greater than a size of a pixel of the corresponding SiPM detector, so that all light beams arrive at the photosensitive surface of the SiPM.

The length L of the beam homogenization prism may be designed based on the following condition: L ≥ d/(2 * tan(θ/2)). Herein, d is a length of a shortest side of the light-passing cross section of the prism, and θ is the divergence angle existing when the light beam enters the prism. For example, in an example, a size of each pixel of the detector is 1 mm * 1 mm, and a size of a light-passing surface of each beam homogenization unit is 1 mm * 1 mm. In other words, d = 1 mm.

The side wall of the beam homogenization prism may be coated with the reflective coating, an upper end face, a lower end face, a light-entrance end face, and a light-exit end face may be coated with an anti-reflective coating, and light-passing surfaces of the microlens and the diffusion sheet may be coated with an anti-reflective coating. An operating end face of the microlens may be further polished.

The optical receiving apparatus may include M * N beam homogenization units, and the M * N beam homogenization units correspond to M * N pixels of the photodetector. The beam homogenization units may be combined together in some common fastening manners, for example, may be bonded by using the photosensitive adhesive.

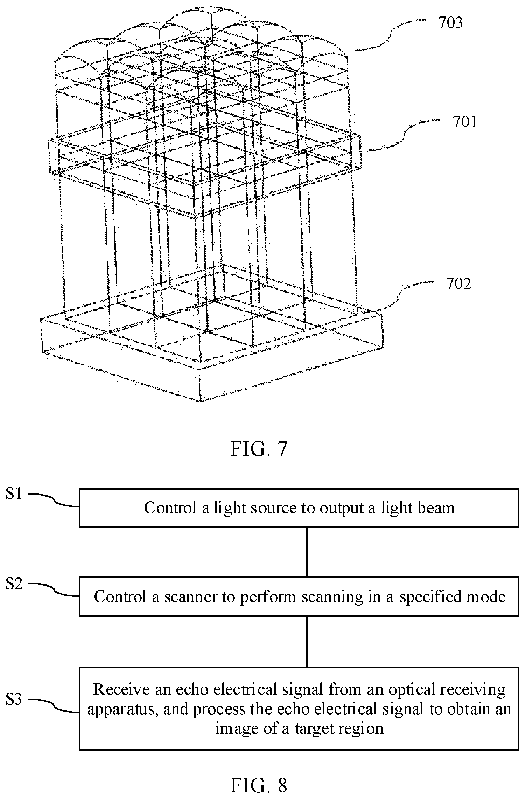

The beam homogenization units may alternatively be embraced and fastened by using a mechanical part. As shown in FIG. 7, 3 * 3 beam homogenization units are fastened by using one mechanical part 701, so that the entire optical receiving apparatus is not easily deformed, and detection performance is more stable.

A light-emitting surface of each beam homogenization unit needs to cover an effective photosensitive surface of a corresponding pixel, and a size of the light-emitting surface is the same as a size of the corresponding pixel, or is the same as a size of the effective photosensitive surface of the corresponding pixel. An exit end fits the photosensitive surface of the SiPM, to ensure that an exit does not leak light.

When the optical receiving apparatus is assembled, the light-emitting surface of the beam homogenization unit needs to be aligned with the photosensitive surface of the pixel of the SiPM detector. A possible assembly method is as follows:
Step 1: Fit the light-emitting end face of the beam homogenization unit and the photosensitive surface of the SiPM detector without applying an adhesive.
Step 2: Irradiate a light-entrance port of any beam homogenization unit of the optical receiving apparatus by using a fine light beam of an operating band of the SiPM detector, monitor an output amplitude of a response signal of a corresponding pixel of the SiPM detector, adjust a location of the beam homogenization unit upward, downward, leftward, and rightward, and fasten the location of the beam homogenization unit when an output signal of the SiPM detector has a maximum amplitude.
Step 3: Apply the photosensitive adhesive around a fitting part of the beam homogenization unit and the SiPM detector, so that the photosensitive adhesive and the SiPM detector are bonded together after the adhesive is dried. In FIG. 7, a location shown in 702 is the fitting part of the beam homogenization unit and the SiPM detector.

In the light detection and ranging system shown in FIG. 1, a light-entrance surface of the optical receiving apparatus 104 is a light-entrance surface 703 of the beam homogenization unit shown in FIG. 7, and needs to be placed on a focal plane of the receiving lens 103, to avoid photo crosstalk at an entrance end.

Corresponding to the light detection and ranging system shown in FIG. 1, an example of the disclosure further provides a scanning and detection method of a light detection and ranging system. As shown in FIG. 8, the method includes the following steps.

S1: A processor 105 outputs a control signal to a light source 101, to drive the light source to output a laser beam. An output end of the light source 101 may further include an emitting lens, so that a transmit light beam is shaped into a spot light beam, and then enters a scanner 102.

S2: The processor 105 outputs a control signal, for example, information such as a scanning angle, to the scanner 102, to drive the scanner to perform scanning in a specified mode. In this way, the light beam output by the light source passes through the scanner and is transmitted to a target region.

S3: The processor 105 receives an echo signal, performs processing, and obtains information such as an angle and a distance of an object corresponding to a current echo. The light beam output from the scanner 102 encounters an object and is reflected, to transmit an echo light beam to the light detection and ranging system. The echo light beam is converged by a receiving lens 103, and enters an optical receiving apparatus 104. After passing through the beam homogenization unit, the light beam irradiates a photosensitive pixel of a SiPM detector. After photoelectric conversion, an echo electrical signal is output, and the processor receives the echo electrical signal for processing.

The processor 105 continues the process, and performs two-dimensional scanning in the target region, to form a point cloud image of the target region.

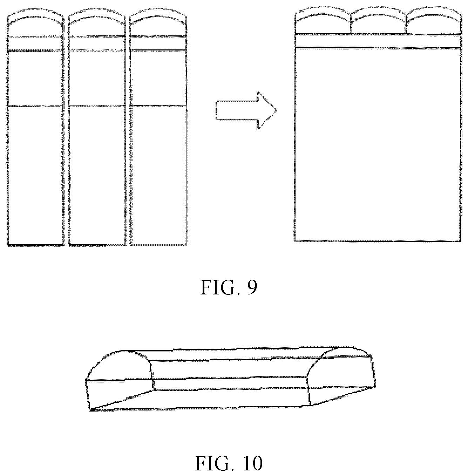

In some actual applications, a plurality of beam homogenization units may be combined to form a row layout, a column layout, or an irregular-shape layout. For example, as shown in FIG. 9, beam homogenization prisms of three regular cubes are combined to form a cuboid beam homogenization prism, and correspond to 1 * 3 pixels of the SiPM detector. A combination method is: combining three beam homogenization prisms with optical path isolation, to form a prism without internal isolation. Further, three spherical microlens groups shown in FIG. 9 may further form one cylindrical microlens. FIG. 10 is a stereogram of a cylindrical microlens.

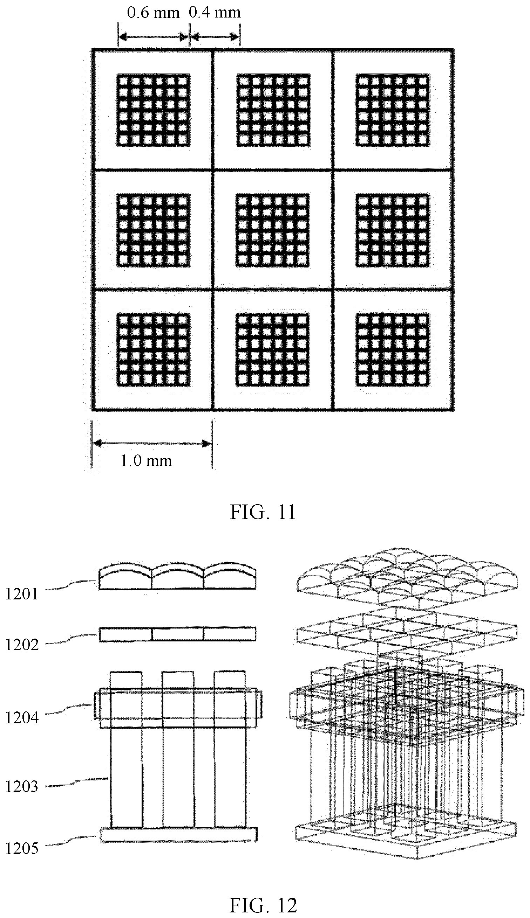

An example of the disclosure further provides an optical receiving apparatus, applied to an array SiPM detector having a low pixel fill factor. As shown in FIG. 11, an edge gap exists between photosensitive surfaces in pixels of the detector. In the figure, a size of each pixel of the detector is 1.0 mm * 1.0 mm, a size of a photosensitive surface of each pixel is 0.6 mm * 0.6 mm, a width of an edge gap between pixels is 0.4 mm, and the fill factor is 60%.

Correspondingly, a structure of a beam homogenization unit is shown in FIG. 12. In the figure, a test diagram is on a left side, and a stereogram is on a right side. The beam homogenization unit includes a microlens 1201, a diffusion sheet 1202, a beam homogenization prism 1203, a fastening mechanical part 1204, and a SiPM detector 1205. It can be learned from the figure that, a size of a light-emitting surface of the beam homogenization prism is reduced to a size the same as a size of the photosensitive surface of the detector. In this way, all photons received by a light-entrance end face can be introduced to the photosensitive surface in the pixel, to improve light energy utilization. It is equivalent to increase the fill factor of the detector from 60% to 100%.

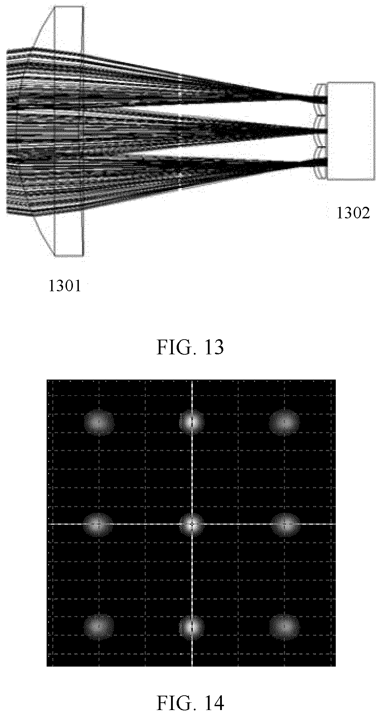

The following describes an example technical effect of examples of the disclosure. FIG. 13 is a diagram of an optical path of an optical receiving apparatus to which no beam homogenization prism is added. After passing through a receiving prism 1301, an echo light ray is focused within a local range of a photosensitive surface of a SiPM detector with 3 * 3 pixels. Only a small part of each pixel, namely, a small quantity of cells, can receive an echo photon. FIG. 14 is a schematic diagram of receiving a corresponding echo photon. It can be learned that all echo photons are focus in a center of the 3 * 3 pixels.

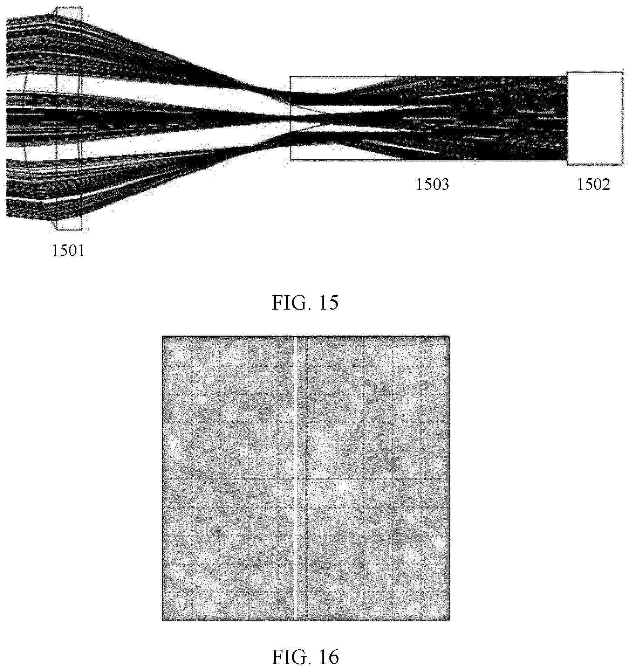

FIG. 15 is a diagram of an optical path of an optical receiving apparatus to which a beam homogenization prism is added. A 3 * 3 beam homogenization prism 1503 is added before a SiPM detector 1502 with 3 * 3 pixels. After passing through a receiving prism 1501, an echo light ray is focused on a light-entrance surface of the homogenization prism. After the echo light ray is reflected by a side wall of the beam homogenization prism for a plurality of times, the echo light ray is evenly distributed on a photosensitive surface of the 3 * 3 pixels. In other words, all cells in a pixel can receive an echo photon more evenly. FIG. 16 is a schematic diagram of receiving a corresponding echo photon. It can be learned that all echo photons are evenly distributed on the 3 * 3 pixels.

The optical receiving apparatus including the beam homogenization unit may also be used in a product such as a security camera and a micro-light detection and imaging device. The product needs to detect a weak optical signal, and a better image may be obtained by using an array SiPM detector.

Although the disclosure is described with reference to examples, in a process of implementing the disclosure that claims protection, persons skilled in the art may understand and implement another variation of the disclosed examples by viewing the accompanying drawings, disclosed content, and the appended claims. In the claims, "comprising" does not exclude another component or another step, and "a" or "one" does not exclude a case of multiple.

## Claims

1. An optical receiving apparatus (104), comprising a photodetector (402, 1205, 1502) and a plurality of beam homogenization units (301, 401), wherein
the photodetector (402, 1205, 1502) comprises a plurality of pixels, each pixel comprises a plurality of cells, and the cell is configured to convert a received optical signal into an electrical signal;
each beam homogenization unit (301, 401) corresponds to at least one pixel of the photodetector (402, 1205, 1502), and is configured to diffuse a received incident light beam to a plurality of cells comprised in the corresponding at least one pixel;
**characterized in that**
the beam homogenization unit (301, 401) comprises a beam homogenization prism (503, 1203, 1503); and
a side wall of the beam homogenization prism (503, 1203, 1503) is coated with a reflective coating, so that the received light beam is diffused to the plurality of cells comprised in the at least one pixel of the photodetector (402, 1205, 1502).

2. The optical receiving apparatus (104) according to claim 1, wherein a length L of the beam homogenization prism (503, 1203, 1503) meets a condition: L ≥ d/(2 * tan(θ/2)), wherein d is a length of a short side of a light-passing cross section of the beam homogenization prism (503, 1203, 1503), and θ is a divergence angle existing when a light beam enters the beam homogenization prism (503, 1203, 1503).

3. The optical receiving apparatus (104) according to any one of claims 1 to 2, wherein the side wall of the beam homogenization prism (503, 1203, 1503) is coated with the reflective coating so that a photon cannot pass through the beam homogenization prism (503, 1203, 1503) to arrive at one adjacent beam homogenization unit (301, 401) to avoid crosstalk.

4. The optical receiving apparatus (104) according to one of claims 1 to 3, wherein the beam homogenization unit (301, 401) further comprises a diffusion sheet (502, 1202), disposed before a light-entrance surface (703) of the beam homogenization prism (503, 1203, 1503); and the diffusion sheet (502, 1202) is configured to diffuse and output the received incident light beam to the light-entrance surface (703) of the beam homogenization prism (503, 1203, 1503).

5. The optical receiving apparatus (104) according to any one of claims 1 to 4, wherein the beam homogenization unit (301, 401) further comprises a microlens (501, 1201), disposed on a light-entrance surface (703) of the beam homogenization unit (301, 401); and the microlens (501, 1201) is configured to converge the received incident light beam on the diffusion sheet (502, 1202) or the light-entrance surface (703) of the beam homogenization prism (503, 1203, 1503).

6. The optical receiving apparatus (104) according to claim 5, wherein an upper end face, a lower end face, a light-entrance end face and a light-exit end face of the beam homogenization prism (503, 1203, 1503) as well as light-passing surfaces the microlens (501, 1201) and of the diffusion sheet (502, 1202) are coated with an anti-reflective coating.

7. The optical receiving apparatus (104) according to any one of claims 1 to 6, wherein components of the beam homogenization unit (301, 401) are connected through bonding by using a photosensitive adhesive.

8. The optical receiving apparatus (104) according to any one of claims 1 to 7, wherein the photodetector (402, 1205, 1502) is a silicon photomultiplier SiPM.

9. The optical receiving apparatus (104) according to any one of claims 1 to 8, wherein a plurality of beam homogenization units (301, 401) are embraced and fastened by using a mechanical part (701, 1204).

10. The optical receiving apparatus (104) according to any one of claims 1 to 9, wherein the beam homogenization unit (301, 401) corresponds to a plurality of pixels, and the plurality of beam homogenization units (301, 401) are a prism without internal isolation, and form a row layout, a column layout, or an irregular-shape layout.

11. The optical receiving apparatus (104) according to any one of claims 1 to 10, wherein a light-emitting surface of the beam homogenization unit (301, 401) has a same size as a photosensitive surface in the pixel of the photodetector (402, 1205, 1502).

12. A light detection and ranging system, comprising a light source (101), a scanner (102), a receiving lens (104), the optical receiving apparatus (104) according to claims 1 to 11, and a processor (105), wherein
the light source (101) is configured to output a laser beam;
the scanner (102) is configured to perform scanning in a specified region;
the receiving lens (104) is configured to converge, on the optical receiving apparatus (104), an echo optical signal reflected by an object;
the optical receiving apparatus (104) is configured to convert the echo optical signal into an echo electrical signal; and
the processor (105) is configured to: analyze the echo electrical signal, and control the light source (101), the scanner (102), and the optical receiving apparatus (104).

13. A detection method, applied to the light detection and ranging system according to claim 12, comprising:
outputting a control signal to a light source (101), to drive the light source (101) to output a laser beam;
outputting a control signal to a scanner (102), to drive the scanner (102) to perform scanning in a specified mode; and
receiving an echo signal output by an optical receiving apparatus (104), processing the echo signal, and obtaining object information corresponding to an echo.

## Patentansprüche

1. Optische Empfangsvorrichtung (104), umfassend einen Photodetektor (402, 1205, 1502) und eine Vielzahl von Strahlhomogenisierungseinheiten (301, 401), wobei
der Photodetektor (402, 1205, 1502) eine Vielzahl von Pixeln umfasst, wobei jedes Pixel eine Vielzahl von Zellen umfasst und die Zelle dazu konfiguriert ist, ein empfangenes optisches Signal in ein elektrisches Signal umzuwandeln;
jede Strahlhomogenisierungseinheit (301, 401) mindestens einem Pixel des Photodetektors (402, 1205, 1502) entspricht und dazu konfiguriert ist, einen empfangenen einfallenden Lichtstrahl auf eine Vielzahl von in dem entsprechenden mindestens einen Pixel enthaltenen Zellen zu streuen;
**dadurch gekennzeichnet, dass**
die Strahlhomogenisierungseinheit (301, 401) ein Strahlhomogenisierungsprisma (503, 1203, 1503) umfasst; und
eine Seitenwand des Strahlhomogenisierungsprismas (503, 1203, 1503) mit einer reflektierenden Beschichtung beschichtet ist, sodass der empfangene Lichtstrahl auf die Vielzahl von Zellen gestreut wird, die in dem mindestens einen Pixel des Photodetektors (402, 1205, 1502) enthalten sind.

2. Optische Empfangsvorrichtung (104) nach Anspruch 1, wobei eine Länge L des Strahlhomogenisierungsprismas (503, 1203, 1503) eine Bedingung erfüllt: L ≥ d/(2 * tan(θ/2)), wobei d die Länge einer kurzen Seite eines Lichtdurchlassquerschnitts des Strahlhomogenisierungsprismas (503, 1203, 1503) ist und θ ein Divergenzwinkel ist, der vorliegt, wenn ein Lichtstrahl in das Strahlhomogenisierungsprisma (503, 1203, 1503) eintritt.

3. Optische Empfangsvorrichtung (104) nach einem der Ansprüche 1 bis 2, wobei die Seitenwand des Strahlhomogenisierungsprismas (503, 1203, 1503) mit der reflektierenden Beschichtung beschichtet ist, sodass ein Photon nicht durch das Strahlhomogenisierungsprisma (503, 1203, 1503) hindurchtreten und zu einer benachbarten Strahlhomogenisierungseinheit (301, 401) gelangen kann, um ein Übersprechen zu vermeiden.

4. Optische Empfangsvorrichtung (104) nach einem der Ansprüche 1 bis 3, wobei die Strahlhomogenisierungseinheit (301, 401) ferner eine Streufolie (502, 1202) umfasst, die vor einer Lichteintrittsfläche (703) des Strahlhomogenisierungsprismas (503, 1203, 1503) angeordnet ist; und die Streufolie (502, 1202) dazu konfiguriert ist, den empfangenen einfallenden Lichtstrahl zu streuen und an die Lichteintrittsfläche (703) des Strahlhomogenisierungsprismas (503, 1203, 1503) auszugeben.

5. Optische Empfangsvorrichtung (104) nach einem der Ansprüche 1 bis 4, wobei die Strahlhomogenisierungseinheit (301, 401) ferner eine Mikrolinse (501, 1201) umfasst, die auf einer Lichteintrittsfläche (703) der Strahlhomogenisierungseinheit (301, 401) angeordnet ist; und die Mikrolinse (501, 1201) dazu konfiguriert ist, den empfangenen einfallenden Lichtstrahl auf der Streufolie (502, 1202) oder der Lichteintrittsfläche (703) des Strahlhomogenisierungsprismas (503, 1203, 1503) zu bündeln.

6. Optische Empfangsvorrichtung (104) nach Anspruch 5, wobei eine obere Endfläche, eine untere Endfläche, eine Lichteintrittsendfläche und eine Lichtaustrittsendfläche des Strahlhomogenisierungsprismas (503, 1203, 1503) sowie die Lichtdurchlassflächen der Mikrolinse (501, 1201) und der Streufolie (502, 1202) mit einer Antireflexbeschichtung beschichtet sind.

7. Optische Empfangsvorrichtung (104) nach einem der Ansprüche 1 bis 6, wobei Komponenten der Strahlhomogenisierungseinheit (301, 401) durch Kleben unter Verwendung eines lichtempfindlichen Klebstoffs verbunden sind.

8. Optische Empfangsvorrichtung (104) nach einem der Ansprüche 1 bis 7, wobei der Photodetektor (402, 1205, 1502) ein Silizium-Photomultiplier (SiPM) ist.

9. Optische Empfangsvorrichtung (104) nach einem der Ansprüche 1 bis 8, wobei eine Vielzahl von Strahlhomogenisierungseinheiten (301, 401) unter Verwendung eines mechanischen Teils (701, 1204) umschlossen und befestigt sind.

10. Optische Empfangsvorrichtung (104) nach einem der Ansprüche 1 bis 9, wobei die Strahlhomogenisierungseinheit (301, 401) einer Vielzahl von Pixeln entspricht und die Vielzahl von Strahlhomogenisierungseinheiten (301, 401) ein Prisma ohne interne Isolierung ist und ein Zeilenlayout, ein Spaltenlayout oder ein Layout mit unregelmäßiger Form bildet.

11. Optische Empfangsvorrichtung (104) nach einem der Ansprüche 1 bis 10, wobei eine Lichtaustrittsfläche der Strahlhomogenisierungseinheit (301, 401) dieselbe Größe aufweist wie eine lichtempfindliche Oberfläche im Pixel des Photodetektors (402, 1205, 1502).

12. Lichtdetektions- und Entfernungsmesssystem, umfassend eine Lichtquelle (101), einen Scanner (102), eine Empfangslinse (104), die optische Empfangsvorrichtung (104) nach den Ansprüchen 1 bis 11 und einen Prozessor (105), wobei
die Lichtquelle (101) dazu konfiguriert ist, einen Laserstrahl auszugeben;
der Scanner (102) dazu konfiguriert ist, eine Abtastung in einem bestimmten Bereich durchzuführen;
die Empfangslinse (104) dazu konfiguriert ist, ein von einem Objekt reflektiertes optisches Echosignal auf der optischen Empfangsvorrichtung (104) zu bündeln;
die optische Empfangsvorrichtung (104) dazu konfiguriert ist, das optische Echosignal in ein elektrisches Echosignal umzuwandeln; und
der Prozessor (105) zu Folgendem konfiguriert ist: Analysieren des elektrischen Echosignals und Steuern der Lichtquelle (101), des Scanners (102) und der optischen Empfangsvorrichtung (104).

13. Detektionsverfahren, das auf das Lichtdetektions- und Entfernungsmesssystem nach Anspruch 12 angewendet wird, umfassend:
Ausgeben eines Steuersignals an eine Lichtquelle (101), um die Lichtquelle (101) zum Ausgeben eines Laserstrahls anzusteuern;
Ausgeben eines Steuersignals an einen Scanner (102), um den Scanner (102) zum Durchführen einer Abtastung in einem bestimmten Modus anzusteuern; und
Empfangen eines von einer optischen Empfangsvorrichtung (104) ausgegebenen Echosignals, Verarbeiten des Echosignals und Erlangen von Objektinformationen, die einem Echo entsprechen.

## Revendications

1. Appareil de réception optique (104), comprenant un photodétecteur (402, 1205, 1502) et une pluralité d'unités d'homogénéisation de faisceau (301, 401), dans lequel
le photodétecteur (402, 1205, 1502) comprend une pluralité de pixels, chaque pixel comprend une pluralité de cellules, et la cellule est configurée pour convertir un signal optique reçu en un signal électrique ;
chaque unité d'homogénéisation de faisceau (301, 401) correspond à au moins un pixel du photodétecteur (402, 1205, 1502), et est configurée pour diffuser un faisceau lumineux incident reçu vers une pluralité de cellules comprises dans l'au moins un pixel correspondant ;
**caractérisé en ce que**
l'unité d'homogénéisation de faisceau (301, 401) comprend un prisme d'homogénéisation de faisceau (503, 1203, 1503) ; et
une paroi latérale du prisme d'homogénéisation de faisceau (503, 1203, 1503) est revêtue d'un revêtement réfléchissant, de sorte que le faisceau lumineux reçu est diffusé vers la pluralité de cellules comprises dans l'au moins un pixel du photodétecteur (402, 1205, 1502).

2. Appareil de réception optique (104) selon la revendication 1, dans lequel une longueur L du prisme d'homogénéisation de faisceau (503, 1203, 1503) satisfait une condition : L ≥ d/(2 * tan(θ/2)), dans lequel d est une longueur d'un côté court d'une section transversale de passage de lumière du prisme d'homogénéisation de faisceau (503, 1203, 1503), et θ est un angle de divergence existant lorsqu'un faisceau lumineux pénètre dans le prisme d'homogénéisation de faisceau (503, 1203, 1503).

3. Appareil de réception optique (104) selon l'une quelconque des revendications 1 et 2, dans lequel la paroi latérale du prisme d'homogénéisation de faisceau (503, 1203, 1503) est revêtue du revêtement réfléchissant de sorte qu'un photon ne peut pas traverser le prisme d'homogénéisation de faisceau (503, 1203, 1503) pour arriver à une unité d'homogénéisation de faisceau (301, 401) adjacente pour éviter la diaphonie.

4. Appareil de réception optique (104) selon l'une des revendications 1 à 3, dans lequel l'unité d'homogénéisation de faisceau (301, 401) comprend également une feuille de diffusion (502, 1202), disposée devant une surface d'entrée de lumière (703) du prisme d'homogénéisation de faisceau (503, 1203, 1503) ; et la feuille de diffusion (502, 1202) est configurée pour diffuser et émettre le faisceau lumineux incident reçu vers la surface d'entrée de lumière (703) du prisme d'homogénéisation de faisceau (503, 1203, 1503).

5. Appareil de réception optique (104) selon l'une quelconque des revendications 1 à 4, dans lequel l'unité d'homogénéisation de faisceau (301, 401) comprend également une microlentille (501, 1201), disposée sur une surface d'entrée de lumière (703) de l'unité d'homogénéisation de faisceau (301, 401) ; et la microlentille (501, 1201) est configurée pour faire converger le faisceau lumineux incident reçu sur la feuille de diffusion (502, 1202) ou la surface d'entrée de lumière (703) du prisme d'homogénéisation de faisceau (503, 1203, 1503).

6. Appareil de réception optique (104) selon la revendication 5, dans lequel une face d'extrémité supérieure, une face d'extrémité inférieure, une face d'extrémité d'entrée de lumière et une face d'extrémité de sortie de lumière du prisme d'homogénéisation de faisceau (503, 1203, 1503) ainsi que des surfaces de passage de lumière de la microlentille (501, 1201) et de la feuille de diffusion (502, 1202) sont revêtues d'un revêtement antireflet.

7. Appareil de réception optique (104) selon l'une quelconque des revendications 1 à 6, dans lequel des composants de l'unité d'homogénéisation de faisceau (301, 401) sont connectés par collage à l'aide d'un adhésif photosensible.

8. Appareil de réception optique (104) selon l'une quelconque des revendications 1 à 7, dans lequel le photodétecteur (402, 1205, 1502) est un photomultiplicateur au silicium SiPM.

9. Appareil de réception optique (104) selon l'une quelconque des revendications 1 à 8, dans lequel une pluralité d'unités d'homogénéisation de faisceau (301, 401) sont entourées et fixées à l'aide d'une pièce mécanique (701, 1204).

10. Appareil de réception optique (104) selon l'une quelconque des revendications 1 à 9, dans lequel l'unité d'homogénéisation de faisceau (301, 401) correspond à une pluralité de pixels, et la pluralité d'unités d'homogénéisation de faisceau (301, 401) sont un prisme sans isolation interne, et forment une disposition en rangées, une disposition en colonnes, ou une disposition de forme irrégulière.

11. Appareil de réception optique (104) selon l'une quelconque des revendications 1 à 10, dans lequel une surface électroluminescente de l'unité d'homogénéisation de faisceau (301, 401) a une même taille qu'une surface photosensible dans le pixel du photodétecteur (402, 1205, 1502).

12. Système de détection et de télémétrie par lumière, comprenant une source de lumière (101), un scanner (102), une lentille de réception (104), l'appareil de réception optique (104) selon les revendications 1 à 11, et un processeur (105), dans lequel
la source de lumière (101) est configurée pour émettre un faisceau laser ;
le scanner (102) est configuré pour réaliser un balayage dans une région spécifiée ;
la lentille de réception (104) est configurée pour faire converger, sur l'appareil de réception optique (104), un signal optique d'écho réfléchi par un objet ;
l'appareil de réception optique (104) est configuré pour convertir le signal optique d'écho en un signal électrique d'écho ; et
le processeur (105) est configuré pour : analyser le signal électrique d'écho et commander la source de lumière (101), le scanner (102), et l'appareil de réception optique (104).

13. Procédé de détection, appliqué au système de détection et de télémétrie par lumière selon la revendication 12, comprenant :
l'émission d'un signal de commande vers une source de lumière (101), pour amener la source de lumière (101) à émettre un faisceau laser ;
l'émission d'un signal de commande vers un scanner (102), pour amener le scanner (102) à réaliser un balayage dans un mode spécifié ; et
la réception d'un signal d'écho émis par un appareil de réception optique (104), le traitement du signal d'écho, et l'obtention d'informations d'objet correspondant à un écho.
